(19) Europäisches Patentamt
European Patent Office
Office européen des brevets

(11) **EP 4 787 720 A1**

(12) **EUROPEAN PATENT APPLICATION**
published in accordance with Art. 153(4) EPC

(43) Date of publication:
**05.08.2026 Bulletin 2026/32**

(21) Application number: **23953460.5**

(22) Date of filing: **26.09.2023**

(51) International Patent Classification (IPC):
**H04B 7/0456** (2017.01)

(52) Cooperative Patent Classification (CPC):
**H04B 7/0456**

(86) International application number:
**PCT/CN2023/121818**

(87) International publication number:
**WO 2025/065302 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **1FINITY INC.**
**Kawasaki-shi, Kanagawa 211-8588 (JP)**

(72) Inventors:
• **LU, Yiwen**
**Beijing 100022 (CN)**
• **ZHU, Jing**
**Beijing 100022 (CN)**
• **ZHANG, Lei**
**Beijing 100022 (CN)**

(74) Representative: **Haseltine Lake Kempner LLP**
**Cheapside House**
**138 Cheapside**
**London EC2V 6BJ (GB)**

(54) **METHOD AND APPARATUS FOR CALCULATING CHANNEL STATE INFORMATION, AND COMMUNICATION SYSTEM**

(57)    Embodiments of this disclosure provide a method and apparatus for calculating channel state information and a communication system. The method includes: at least receiving channel state information (CSI) reporting configuration information, wherein the CSI reporting configuration information comprises M pieces of sub-configuration information, where M is an integer greater than or equal to 1; and calculating and reporting CSI at least according to one or more corresponding symbols on one or more first antenna ports to which at least one of the M pieces of sub-configuration information is related.

Fig. 3

EP 4 787 720 A1

**Description**

Field

This disclosure relates to the field of communication.

Background

With the popularization of the fifth generation (5G) communication network in various industries and its application in more geographical areas, in order to process more advanced services, very high data rates and denser networks are required, as well as the use of more antennas, larger bandwidths, and more frequency bands. As a result, energy consumption of 5G devices is becoming increasingly high. According to data from operators, average energy consumption of a 5G base station exceeds three times that of an LTE (Long Term Evolution) base station. Nearly 50% of the cost of deploying 5G networks for operators is electricity expenses. More importantly, even during periods of no service, 5G base stations still incur significant energy consumption costs. Therefore, network energy conservation is of great significance for improving environmental sustainability, reducing environmental impact (such as greenhouse gas emissions), and saving operating costs. 5G network energy conservation is an urgent problem to be solved.

In order to achieve network energy conservation, R18 (version 18, release 18, Rel-18) has initiated research on various energy-saving (energy conservation) technologies related to network energy conservation. In the discussion, network energy-saving technologies can be divided into types such as time-domain/frequency-domain/spatial/energy domain energy-saving. Space domain energy saving, for example, dynamically adjusts the number of antennas, energy domain energy saving, for example, dynamically adjusts the data transmission power, and time domain energy saving, for example, introduces cell DTX (Discontinuous Transmission)/DRX (Discontinuous Reception Technology), etc.

Use of various energy-saving technologies can save a lot of energy for network devices, but at the same time, it can also have a negative impact on other processes or technologies in the communication system, and cause compatibility issues with the configuration methods in existing standards. For example, in the NR (New Radio) energy-saving scenario, the terminal side needs to measure and report one or more energy-saving sub configurations of CSI according to existing or enhanced CSI (Channel State Information) resource configuration, in order to provide sufficient channel state information reporting for data transmission with energy-saving goals for the base station.

It should be noted that the above description of the background art is merely provided for clear and complete explanation of this disclosure and for easy understanding by those skilled in the art. And it should not be understood that the above technical solution is known to those skilled in the art as it is described in the background art of this disclosure.

Summary

It was found by the inventors that an existing CSI reporting mechanism is unable to support report of multiple pieces of CSI of one or more sub-configuration. How a terminal equipment performs joint channel measurement and reporting on one or more sub-configurations becomes an urgent problem needing to be solved in the network energy-saving technologies.

In order to solve at least one of the above problems or other similar problems, embodiments of this disclosure provide a method and apparatus for calculating channel state information and a communication system.

According to one aspect of the embodiments of this disclosure, there is provided a method for calculating channel state information, applicable to a terminal equipment, the method including:

at least receiving channel state information (CSI) reporting configuration information, wherein the CSI reporting configuration information includes M pieces of sub-configuration information, where M is an integer greater than or equal to 1; and
calculating and reporting CSI at least according to one or more corresponding symbols on one or more first antenna ports to which at least one of the M pieces of sub-configuration information is related.

According to another aspect of the embodiments of this disclosure, there is provided an apparatus for calculating channel state information, configured in a terminal equipment, the apparatus including:

a receiving unit configured to at least receive channel state information (CSI) reporting configuration information, wherein the CSI reporting configuration information includes M pieces of sub-configuration information, where M is an integer greater than or equal to 1; and
a processing unit configured to calculate and report CSI at least according to one or more corresponding symbols on one or more first antenna ports to which at least one of the M pieces of sub-configuration information is related.

According to a further aspect of the embodiments of this disclosure, there is provided a communication system, including a network device and a terminal equipment, the terminal equipment including the apparatus for calculating channel state information as described above.

One of the advantages of the embodiments of this disclosure exists in that calculation and reporting of CSI are performed at least according to the corresponding symbol(s) on the first antenna port(s) related to at least one of the M pieces of sub-configuration information. Hence, the CSI may be accurately obtained, data transmission performances may be improved, and overall throughput of a single user and the network may be improved.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

FIG. 1 is a schematic diagram of a communication system of an embodiment of this disclosure;

FIG. 2 is a schematic diagram of an energy-saving scenario of an embodiment of this disclosure;

FIG. 3 is a schematic diagram of a method for calculating channel state information of an embodiment of this disclosure;

FIG. 4 is a schematic diagram of first antenna ports of the embodiment of this disclosure;

FIG. 5 is a schematic diagram of an implementation of 302 of the embodiment of this disclosure;

FIG. 6 is a schematic diagram of an apparatus for calculating channel state information of an embodiment of this disclosure;

FIG. 7 is a block diagram of a network device of an embodiment of this disclosure; and

FIG. 8 is a block diagram of a terminal equipment of an embodiment of this disclosure.

Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any level, which may, for example, include but not limited to the following communication protocols: 1G (generation), 2G, 2.5G, 2.75G, 3G, 4G, 4.5G, 5G, New Radio (NR) and 6G in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

Wherein, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, a machine to machine (M2M) terminal, and a terminal supporting sidelink communication, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" in this text may refer to a network device, and may also refer to a terminal equipment.

Scenarios in the embodiments of this disclosure shall be described below by way of examples; however, this disclosure is not limited thereto.

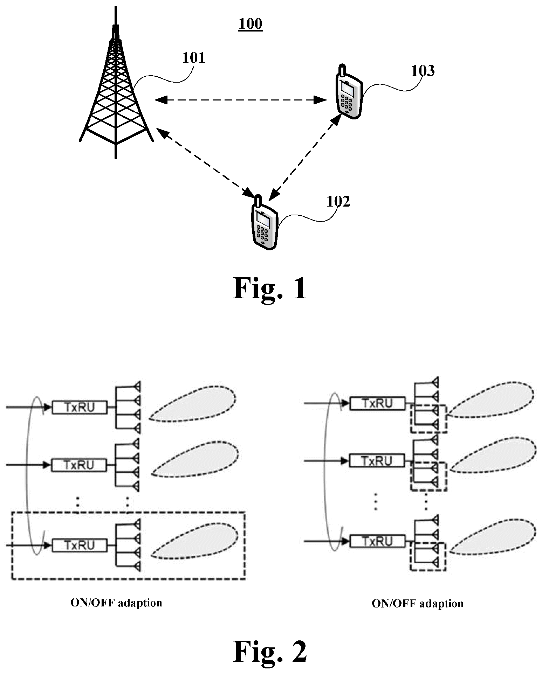

FIG. 1 is a schematic diagram of a communication system of an embodiment of this disclosure, in which a case where terminal equipments and a network device are taken as examples is schematically shown. As shown in FIG. 1, the communication system 100 may include a network device 101 and terminal equipments 102, 103. For the sake of simplicity, an example having only two terminal equipments and one network device is schematically given in FIG. 1; however, the embodiment of this disclosure is not limited thereto.

In the embodiment of this disclosure, existing services or services that may be implemented in the future may be performed between the network device 101 and the terminal equipments 102, 103. For example, such services may include but not limited to an enhanced mobile broadband (eMBB), massive machine type communication (mMTC), and ultra-reliable and low-latency communication (URLLC), etc.

It should be noted that FIG. 1 shows that two terminal equipments 102, 103 are both in coverage of the network device 101. However, this disclosure is not limited thereto, and the two terminal equipments 102, 103 may not be in coverage of the network device 101, or one terminal equipment 102 is in coverage of the network device 101 and the other terminal equipment 103 is out of coverage of the network device 101.

In the embodiments of this disclosure, high-layer signaling may be, for example, radio resource control (RRC) signaling; for example, it is referred to an RRC message, which includes an MIB, system information, and a dedicated RRC message; or, it is referred to an as an RRC information element (RRC IE). High-layer signaling may also be, for example, medium access control (MAC) signaling, or an MAC control element (MAC CE); however, this disclosure is not limited thereto.

In a mobile communication system, a terminal equipment typically performs channel state information (CSI) measurement according to indications and configurations of a network device, and reports the measured CSI to the network device. In scheduling the terminal equipment, the network device may make reference to this CSI to schedule the terminal equipment to transmit in appropriate transmission schemes on suitable physical resources. Different terminal equipments may experience different physical channel conditions, and employing a CSI feedback mechanism allows for reasonable and efficient utilization of physical resources, thereby enhancing the overall efficiency of network transmissions.

In the CSI feedback mechanism of NR, the terminal equipment measures and reports reference signals primarily according to CSI configurations, the reference signals including CSI-RSs (channel state information-reference signals) and SSBs (synchronization signal blocks). The CSI configurations of NR are mainly divided into two parts, in which a first part is reference resources (CSI-RS resource settings) configured by the network device for the terminal equipment for CSI measurement, and a second part is configuring the terminal equipment by the network device for how to perform CSI reporting (CSI reporting settings).

For example, the CSI-RS resource settings may be used for interference measurement and CSI channel measurement. Each CSI-RS resource setting contains S resource sets, each resource set containing Ks CSI-RS resources. An aperiodic resource setting may contain one or more resource sets. For an aperiodic semi-persistent resource setting, when it is used for CSI acquisition, it can only contain one resource set.

Regarding a value of Ks:

- when it is used for CSI channel measurement, if a codebook type in the reporting setting is 'Type I' (specifically including CodebookType='TypeISinglePanel' or 'TypeIMultiPanel'), Ks <= 32;
- when it is used for CSI channel measurement, if a codebook type in the reporting setting is 'Type II' (specifically including CodebookType='typeII', 'typeII-PortSelection', 'typeII-r16', 'typeII-PortSelection-r16', 'typeII-PortSelection-r17'), Ks = 1. This is mainly because that a computational complexity of Type II is relatively high, posing a greater computational challenge for the terminal equipment. Therefore, the NR system relatively reduces the computational complexity of terminal equipment by restricting values of Ks.

A CSI report consists of two parts (part 1 and part 2), wherein CSI part 1 (also referred to as part 1) has a fixed payload size and indicates the number of information bits of CSI part 2. In CSI reporting, when current CSI measurement is used for CSI channel measurement, reported contents are defined according to different codebook types as follows:

Type I CSI: part 1 includes an RI (rank indicator)/CRI (CSI-RS resource index) and CQI (channel quality indicator) of a first CW (codeword); and part 2 includes LI (layer indicator) and PMI (precoding matrix indicator), and CQI of a second CW when a rank is greater than 4;
Type II CSI: part 1 includes an RI, a CQI and the number of non-zero broadband amplitude coefficients in each layer; and part 2 includes an LI and a PMI.

In the NR system, a UE may perform channel state measurement according to received non-zero-power (NZP) CSI-RS resources, and perform reporting feedback according to a report quantity configuration in reporting settings. When the report quantity includes a CQI (channel quality indication) configuration, the UE may jointly calculate reporting CQI according to a current channel estimation result and a CQI calculation assumption in the standards. A specific calculation process at the UE side is as follows (it should be noted that the following contents are only a specific example of the calculation process, and the calculation process at the UE side may also be other contents):

1) estimating current channel estimation H by the UE via CSI-RS;
2) calculating optimal precoding information W by the UE via the channel estimation H;
3) calculating a current SINR (signal to interference plus noise ratio) by the UE weighting the channel estimation result H by precoding information W;
4) fitting a modulation order and an SINR curve by the UE according to a calculation result of the current SINR, and performing optimal CQI calculation and reporting according to the CQI quantization definition in the standards.

According to the above UE calculation process, the CQI calculation is to reflect channel quality information in real channel transmission of physical downlink shared channels (PDSCHs). Therefore, in CQI calculation, the UE needs to map received PDSCH signals transmitted on antenna ports [1000,..., 1000+v-1] to related signals (related symbols) transmitted on antenna ports [3000,...,3000+P-1] (as the CSI-RS signals start to be transmitted at a port 3000, the related signals here specifically refer to CSI-RS signals), where P is the number of antenna ports. For example, in the CQI calculation, a mapping relationship according to single-point transmission in the NR system is shown in Table 1.

Table 1 Mapping relationship according to single-point transmission in the NR System

For CQI calculation, the UE should assume that PDSCH signals on antenna ports in the set [1000, ..., 1000+v-1] for v layers would result in signals equivalent to corresponding symbols transmitted on antenna ports [3000, ..., 3000+P-1]), i.e.

$$\begin{bmatrix} y^{(3000)}(i) \\ \cdots \\ y^{(3000+P-1)}(i) \end{bmatrix} = W(i) \begin{bmatrix} x^{(0)}(i) \\ \cdots \\ x^{(v-1)}(i) \end{bmatrix}$$

For example, $x(1) = [x^{(0)}(i)...x^{(v-1)}(i)]^T$ denotes signal information of v layers of a PDSCH. As PDSCH ports are one-to-one mapped to the layers, x(i) also denotes signal information of v PDSCH ports [1000, ...,1000+v-1], and $y(i) = [y^{(3000)}(i)...y^{(3000+P-1)}(i)]^T$ denotes signal information of ports to which P CSI-RSs correspond.

It can be seen from the above equation that there exists a precoding mapping relationship between the channel state information calculated according to the CSI-RSs and the real PDSCH transmission ports. Therefore, when the UE calculates the CQI, it needs to calculate the precoding information in advance, weight precoding calculation according to the current mapping relationship, and feed back the channel quality information (CQI) under the assumption of the PDSCH transmission channels.

For a definition of a port, in the current standards, port index values of CSI-RSs of different numbers of ports are defined. That is, port index values of 2 antenna ports are [3000, 3001], port index values of 4 antenna ports are [3000, 3001, 3002, 3003], port index values of 8 antenna ports are [3000, 3001, ..., 3007], port index values of 12 antenna ports are [3000, 3001, ..., 3011], port index values of 16 antenna ports are [3000, 3001, ..., 3015], and port index values of 22 antenna ports are [3000, 3001, ..., 3031].

In an NR energy-saving scenario, it is supported that enhanced CSI resource configurations are associated with one or more sub-configurations in the CSI reporting configuration, that is, the terminal side may measure and report CSI of one or more energy-saving sub-configurations according to the enhanced CSI resource configuration, thereby providing sufficient reporting of channel state information for data transmission for the purpose of energy saving for base stations.

For CSI resource enhancement method 1 for the purpose of energy saving, one or more CSI-RS resources in a CSI-RS resource set used for channel measurement may be associated with the same sub-configuration provided in the CSI reporting configuration, that is, one sub-configuration in the CSI reporting configuration may be associated with one or more CSI-RS resources used for channel measurement in the CSI-RS resource set, wherein resources in the resource set used for channel measurement have identical numbers of antenna ports.

For CSI resource enhancement method 2 for the purpose of energy saving, one or more CSI-RS resources in the CSI-RS resource set used for channel measurement may be associated with multiple sub-configurations provided in the CSI reporting configuration, wherein each CSI-RS resource is associated with all the sub-configurations, and resources in the resource set used for channel measurement have identical numbers of antenna ports.

In the related art, the CSI-RS resource configuration is an RRC semi-static configuration, and the number of CSI-RS ports and time-frequency positions do not change for a long period of time.

In order to achieve the goal of network energy saving, a feasible solution is that a network device adjusts antenna configurations used to serve for terminal equipments according to real-time needs of the network, such as the number of antenna elements, and antenna ports, etc.

FIG. 2 is a schematic diagram of an energy-saving scenario of the embodiment of this disclosure. As shown in FIG. 2, a spatial domain/energy domain element adjustment technique related to network energy saving may be divided into two types:

the left of FIG. 2, which be referred to as type 1 adjustment, for example, it corresponds to energy-saving scenario 1, and all antennas (elements) associated with a logical antenna port (also known as a digital antenna port, or an antenna port, or a port, etc.) are enabled or disabled. In this mode, the network device may shut down all antennas (elements) to which one or more antenna ports correspond. After the antennas are shut down, transmit power of each port remains unchanged, and a total number of antenna ports will be decreased. Therefore, such adjustment will directly affect the number of antenna ports, thereby further affecting transmit power of the reference signals.

the right of FIG. 2, which be referred to as type 2 adjustment, for example, it corresponds to energy-saving scenario 2, and a part of antenna elements associated with a logical antenna port are enabled or disabled. In this mode, the network device may shut down a part of antennas (elements) to which all antenna ports correspond. After the antennas are shut down, the number of antenna ports remains unchanged, and transmit power of each port will be decreased. Therefore, such adjustment will affect beamforming gains of the network device, thereby further affecting transmit power of the reference signals.

As shown in FIG. 2, a network energy-saving effect is achieved in scenario 1 by shutting down a part of digital antenna ports. At the terminal equipment side, after shutting down different numbers of antenna ports, the terminal equipment needs to measure according to different numbers of ports to generate CSI for different digital ports. Therefore, values of 'nrofports' in the CSI resource configuration and/or N1 and N2 in the reporting settings may vary under different energy-saving configurations. Hence, the number of antenna port dimensions in PMI matrices in CSI reported under different energy-saving sub-configurations are different. In most common energy-saving scenario 1, different antenna port sub-configurations are differentiated by an antenna port indication in a CSI-RS resource, for example, different antenna port subsets in a CSI-RS resource may correspond to shutdown configurations of different antenna ports.

As shown in FIG. 2, in energy-saving scenario 2, a network energy-saving effect is achieved by dynamically adjusting the number(s) of TXRUs (transceiver units)/RF antennas on the premise of not adjusting the number of digital antenna ports. Therefore, in this case, 'nrofports' in CSI resource configurations and/or N1 and N2 in reporting settings under different energy-saving sub-configurations may remain unchanged, and the number of antenna port dimensions in PMI matrices of the reported CSI may remain unchanged. Therefore, it may be protocol transparent at the terminal equipment side. In most common energy-saving scenario 2, different energy-saving sub-configurations are differentiated by different CSI-RSs, for example, different resources may correspond to shutdown of different energy-saving sub-configurations.

Especially in energy-saving scenario 2, it can be seen from the CSI-RS resource configuration enhancement method 2 that each sub-configuration at least needs to include one or more pieces of CSI-RS resource information, such as a CSI-RS resource ID (identifier) list, the list containing one CSI-RS resource ID or multiple CSI-RS resource IDs. Therefore, a sub-configuration may be associated with at least one CSI-RS resource ID.

Thus, according to the CQI calculation assumption in the current standards, in transmission according to a non-energy-saving scenario, only a mapping relationship between all ports of one CSI-RS resource and PDSCH ports is specified, and the precoding information W is single information. However, in energy-saving scenario 1, different sub-configurations correspond to different port subsets of all ports, each sub-configuration corresponds to all ports of the PDSCH. Hence, the current mapping relationship is insufficient to reflect port correspondence relationships in real energy-saving scenarios. Under the current assumptions of PMI and CQI calculation, the PMI and CQI calculated by the UE according to existing techniques is unable to accurately and completely reflect quality of real channels experienced by the resource ports in an energy-saving scenario, thereby reducing the accuracy and reliability of data scheduling, leading to a decrease in data transmission performance and a decrease in throughput of a single user and overall network.

In order to solve at least one of the above problems, embodiments of this disclosure provide a method and apparatus for calculating channel state information and a communication system.

Embodiment of a first aspect

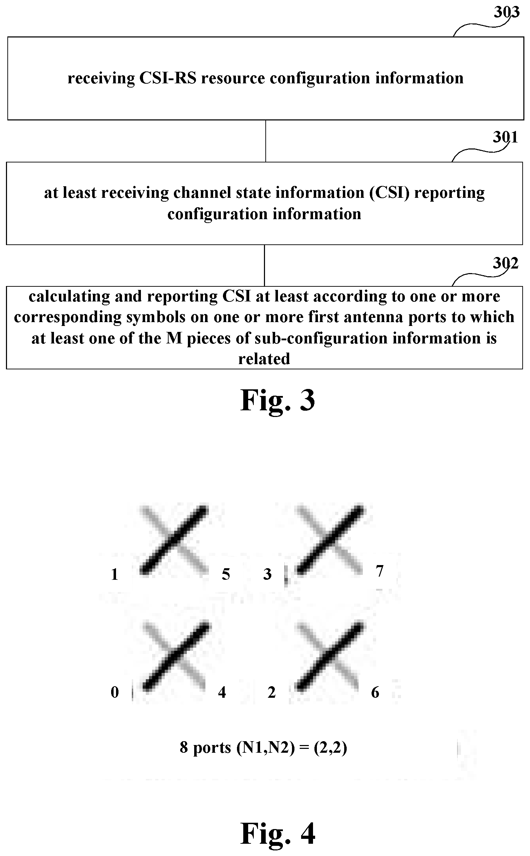

The embodiment of this disclosure provides a method for calculating channel state information, which shall be described from a terminal equipment side. FIG. 3 is a schematic diagram of the method for calculating channel state information of the embodiment of this disclosure. As shown in FIG. 3, the method includes:

301: at least receiving channel state information (CSI) reporting configuration information, wherein the CSI reporting configuration information includes M pieces of sub-configuration information, where M is an integer greater than or equal to 1; and
302: calculating and reporting CSI at least according to one or more corresponding symbols on one or more first antenna ports to which at least one of the M pieces of sub-configuration information is related.

According to the above embodiment, calculation and reporting of CSI are performed at least according to the corresponding symbol(s) on the first antenna port(s) related to at least one of the M pieces of sub-configuration information. Hence, the CSI may be accurately obtained, data transmission performances may be improved, and overall throughput of a single user and the network may be improved.

It should be noted that FIG. 3 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 3.

In some embodiments, the CSI at least includes: CQI (channel quality information), and/or, PMI (precoding matrix indicator) information.

In some embodiments, as shown in FIG. 3, the method further includes:
303: receiving CSI-RS resource configuration information, wherein the CSI-RS resource configuration information at least includes indication information of the number of ports (nrofports).

In some embodiments, the CSI-RS resource configuration information is used to configure at least one CSI-RS resource set, wherein a CSI-RS resource set in the at least one CSI-RS resource set configured by the CSI-RS resource configuration information includes N CSI-RS resources, where N is an integer greater than or equal to 1. The CSI-RS resources may be time-frequency resources, etc.

In some embodiments, the indication information of the number of ports *(nrofports)* is used to indicate the number Q of configured ports of each CSI-RS resource in the CSI-RS resource set. The number Q of ports may be an integer less than or equal to 32; however, this disclosure is not limited thereto, and the number of ports may also be an integer greater than 32.

In some embodiments, the CSI reporting configuration information (CSI report configuration information) includes M pieces of sub-configuration information, where M is an integer greater than or equal to 1. The M pieces of sub-configuration information are used to configure M energy-saving sub-configurations (also referred to as sub-configurations). Therefore, the terminal equipment is able to determine CSI-RS resources for performing CSI channel measurement for each energy-saving sub-configuration according to the CSI-RS resource configuration information and CSI reporting configuration information. In addition, the M pieces of sub-configuration information may indicate a reporting mode (such as a bit width, etc.) of the CRI in the CSI report to which the M energy-saving sub-configurations correspond. Thus, the terminal equipment is able to determine a specific form of CRI in the CSI report reported to the network device according to the CSI-RS resource configuration information and/or the CSI reporting configuration information.

In some embodiments, in some energy-saving scenarios, such as energy-saving scenario 1, each CSI-RS resource in a CSI-RS resource set may correspond to M antenna port configurations, wherein a configuration of antenna ports corresponds to one sub-configuration.

For example, for a CSI-RS resource set, it is configured with 4 CSI-RS resources, each CSI-RS resource being configured with up to 32 antenna ports. Taking that the number *(nrofports)* of antenna ports is 8 and M=3 as an example, three types of antenna ports may be configured for each CSI-RS resource, such as 8 ports, 4 ports, and 2 ports. A first sub-configuration may be: 4 CSI-RS resources in the CSI-RS resource set, and each CSI-RS resource has 8 antenna ports; a second sub-configuration may be: 4 CSI-RS resources in the CSI-RS resource set, and each CSI-RS resource has 4 antenna ports; a third sub-configuration may be: 4 CSI-RS resources in the CSI-RS resource set, and each CSI-RS resource has 2 antenna ports. That is, ports to which CSI-RS resources in a sub-configuration correspond are a universal set or a non-empty subset of ports that the CSI-RS resource is able to configure.

In some embodiments, the CSI reporting configuration information includes M pieces of sub-configuration information. In some energy-saving scenarios, such as energy-saving scenario 1, the CSI reporting configuration information is related to one CSI-RS resource set in the at least one CSI-RS resource set configured by the CSI-RS resource configuration information. Each sub-configuration information in the M pieces of sub-configuration information in the CSI reporting configuration information is related to N CSI-RS resources in one CSI-RS resource set in the at least one CSI-RS resource set. In other words, every sub-configuration information in the M pieces of sub-configuration information corresponds to all CSI-RS resources in a CSI-RS resource set.

Wherein, *m-th* sub-configuration information in the M pieces of sub-configuration information may include 1 piece of port indication information (*port-subsetIndicator*), where 1≤m≤M. The port indication information indicates ports on which the terminal equipment performs channel measurement. Port indication information of each sub-configuration in the M sub-configurations may be identical or different, for example, ports or numbers of ports of the sub-configurations may be identical or different.

The port indication information may be represented by a bitmap of Q bits. In this bitmap, "1" indicates that the port is enabled, and "0" indicates that the port is not enabled.

For example, for a CSI-RS resource set, it is configured with 4 CSI-RS resources, each CSI-RS resource being configured with up to 32 antenna ports. Taking that the number (nrofports) of antenna ports is 8 and M=3 as an example, three types of antenna ports may be configured for the CSI-RS resources, such as 8 ports, 4 ports, and 2 ports. The port indication information may be represented by a bitmap of 8 bits. For example, first sub-configuration information may be a all-one bitmap of 8 bits, such as '11111111', indicating that 8 ports are configured and 8 ports are enabled; second sub-configuration information may be a bitmap of 8 bits with 4 bits being 1 and other bits being 0, such as '10101010', indicating that 8 ports are configured and 4 ports therein are enabled; third sub-configuration information may be a bitmap of 8 bits with 2 bits being 1 and other bits being 0, such as '10100000', indicating that 8 ports are configured and 2 ports therein are enabled.

In some embodiments, the first antenna ports include [3000 + $p^{(0)}$, ..., 3000 + $p^{(P-1)}$], where P is the number of enabled ports indicated by the port indication information of the sub-configuration information, and 0≤$p^{(j)}$≤Q, 0≤j≤P-1, where Q is equal to a value of the indication information of the number of ports *(nrofports)* in the CSI-RS resource configuration information.

For example, in a case where the number of ports nrofports=8 and the port indication information *port-subsetIndicator*='10101010', P=4, and Q=8.

FIG. 4 is a schematic diagram of the first antenna port in the embodiment of this disclosure. As shown in FIG. 4, when the number of ports *nrofports=8* and the port indication information *port-subsetIndicatot*='10101010', 8 antenna ports are configured on one CSI-RS resource, and according to the above sub-configuration information, antenna ports in the 8 antenna ports with indices 0, 2, 4 and 6 are selected (enabled).

In some embodiments, a value of $p^{(j)}$ in the first antenna port may be an index of a *j-th* enabled port indicated by the port indication information (*port-subsetIndicator*). Thus, the first antenna port may be intuitively represented, making it easier for the terminal to implement.

For example, when the port indication information *port-subsetIndicator*='10101010', P=4, $p^{(0)}$=0, $p^{(1)}$=2, $p^{(2)}$=4, $p^{(3)}$=6. The first antenna ports include [3000,3002,3004,3006].

In some embodiments, the value of $p^{(j)}$ in the first antenna port may be j. Therefore, the first antenna port may be represented in a simple manner.

For example, when the port indication information *port-subsetIndicator*='10101010', P=4, $p^{(0)}$=0, $p^{(1)}$=1, $p^{(2)}$=2, $p^{(3)}$=3. The first antenna ports include [3000,3001,3002,3003].

In some embodiments, the first antenna ports include [3000 + 0, ..., 3000 + *P-1*], where P is the number of enabled ports indicated by the port indication information (*port-subsetIndicator*) of the sub-configuration information. Thus, existing parameters may be used to represent the first antenna port, which is easy to implement and has good compatibility.

In some embodiments, the calculation of the CQI is at least according to assumed physical downlink shared channel (PDSCH) signals, the PDSCH signals being transmitted on antenna ports [1000,..., 1000+v -1], and being associated with the corresponding symbols on the first antenna ports, where v is the number of PDSCH transmission layers.

In some embodiments, a correlation between the PDSCH signals and the corresponding symbols on the first antenna ports of an *m-th* sub-configuration is:

$$\begin{bmatrix} y^{(3000+p^{(0)})}(i) \\ \cdots \\ y^{(3000+p^{(P-1)})}(i) \end{bmatrix} = W^m(i) \begin{bmatrix} x^{(0)}(i) \\ \cdots \\ x^{(v-1)}(i) \end{bmatrix} ;$$

where $\begin{bmatrix} x^{(0)}(i) \\ \cdots \\ x^{(v-1)}(i) \end{bmatrix}$ denotes signal vectors of v layers of the PDSCH signals, $\begin{bmatrix} y^{(3000+p^{(0)})}(i) \\ \cdots \\ y^{(3000+p^{(P-1)})}(i) \end{bmatrix}$ denotes the

corresponding symbols on the antenna ports [3000 + $p^{(0)}$, ..., 3000 + $p^{(P-1)}$], and $W^m(i)$ denotes PMI information calculated according to the *m-th* sub-configuration information, and $1 \leq m \leq M$.

In some embodiments, a correlation between the PDSCH signals and the corresponding symbols on the first antenna ports of an *m-th* sub-configuration is:

$$\begin{bmatrix} y^{(3000+0)}(i) \\ \cdots \\ y^{(3000+P-1)}(i) \end{bmatrix} = W^m(i) \begin{bmatrix} x^{(0)}(i) \\ \cdots \\ x^{(v-1)}(i) \end{bmatrix} ;$$

where $\begin{bmatrix} x^{(0)}(i) \\ \cdots \\ x^{(v-1)}(i) \end{bmatrix}$ denotes signal vectors of v layers of the PDSCH signals, $\begin{bmatrix} y^{(3000+0)}(i) \\ \cdots \\ y^{(3000+P-1)}(i) \end{bmatrix}$ denotes the

corresponding symbols on the antenna ports [3000 + 0, ..., 3000 + *P* - 1], and $W^m(i)$ denotes PMI information calculated according to *m-th* sub-configuration information, and $1 \leq m \leq M$.

In some embodiments, for the M pieces of sub-configuration information in the CSI reporting configuration information, CSI calculation and reporting may be performed for each piece of sub-configuration information in the M pieces of sub-configuration information; or, CSI calculation and reporting may be performed for a part of the sub-configuration information in the M pieces of sub-configuration information, which are not limited in this disclosure.

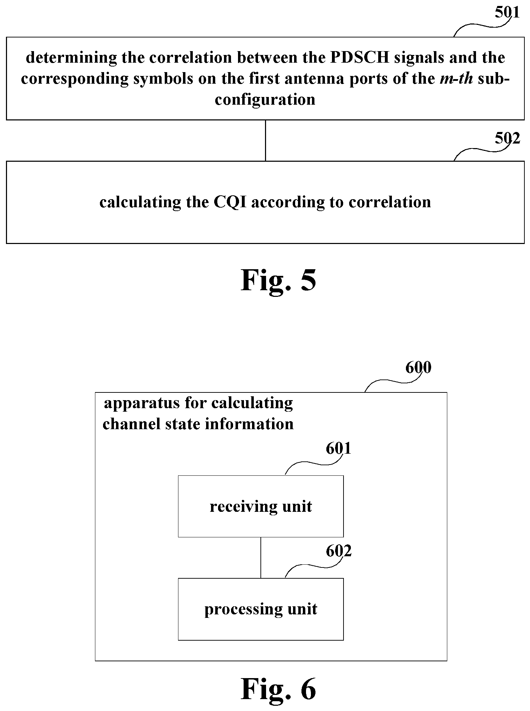

FIG. 5 is a schematic diagram of an implementation of 302 of the embodiment of this disclosure. In some embodiments, as shown in FIG. 5, in 302, the calculation of the CQI may include:

501: determining the correlation between the PDSCH signals and the corresponding symbols on the first antenna ports of the *m-th* sub-configuration; and
502: calculating the CQI according to correlation.

A method for calculating the CQI in this disclosure shall be described below with reference to examples.

Example 1:

1) step 1: the terminal equipment receives CSI-RS resource configuration information for channel measurement, the CSI-RS resource configuration information at least including the indication information of the number of ports 'nrofports', and further including 1 CSI-RS resource set, the CSI-RS resource set including N=4 CSI-RS resources;
2) step 2: the CSI reporting configuration information includes at least M=3 pieces of sub-configuration information, the M=3 pieces of sub-configuration information being used to configure CSI reporting information of M=3 pieces of sub-configurations, where M=3, representing three types of sub-configuration information: 8-port sub-configuration information, 4-port sub-configuration information, and 2-port sub-configuration information;

    a) step 2-1: configuration of the port indication information of the 3 pieces of sub-configuration information may be performed in following manners:

        i. port indication of the sub-configurations is performed via a bitmap of Q bits,

            1. Q is equal to a value of the indication information of the number of ports 'nrofports' in the CSI-RS resource configuration information.
            2. 8 ports may be indicated by a bitmap of 8 bits, such as '11111111', that is, 8 ports are configured and enabled, where P is the number of enabled ports indicated by the port indication information *(port-subsetIndicator)* of the sub-configuration information, i.e. the number of ports with a value of 1 in the bitmap, i.e. P=8;
            3. 4 ports may be indicated by a bitmap of 8 bits, such as '10101010', that is, 8 ports are configured and ports with indices of 0, 2, 4 and 6 in the 8 ports are enabled, where P is the number of enabled ports indicated by the port indication information *(port-subsetIndicator)* of the sub-configuration information, i.e. the number of ports with a value of 1 in the bitmap, i.e. P=4;
            4. 2 ports may be indicated by a bitmap of 8 bits, such as '10100000', that is, 8 ports are configured and ports with indices of 0 and 2 in the 8 ports are enabled, where P is the number of enabled ports indicated by the port indication information *(port-subsetIndicator)* of the sub-configuration information, i.e. the number of ports with a value of 1 in the bitmap, i.e. P=2;

    b) parameters under a codebook of each piece of sub-configuration information are configured in a manner as follows:

        i. (N1m, N2m) denotes a codebook parameter of the *m-th* sub-configuration information, where N1m is the number of antenna ports in a first dimension (horizontal dimension) in a polarization direction, and N2m is the number of antenna ports in a second dimension (vertical dimension) in a polarization direction; wherein for the *m-th* sub-configuration, 2*N1m*N2m=Pm= $P_{CSI-RS}$, that is, the number of CSI-RS ports of the *m-th* sub-configuration is Pm ($P_{CSI-RS}$)

            1. for sub-configuration 1: 2*N11*N21=8;
            2. for sub-configuration 2: 2*N11*N21=4;
            3. for sub-configuration 3: 2*N11*N21=2.

3) step 3: 4 resources in the CSI-RS resource configuration information are all related to M=3 pieces of sub-configuration information in the CSI reporting configuration information, and the terminal equipment selects and calculates the optimal CSI-RS resource for CSI reporting of each sub-configuration;
4) step 4: the terminal equipment measures channel state information under three sub-configurations according to 4 resources and the M=3 pieces of sub-configuration information, and reports all CSI of the three sub-configurations.

For example, the user equipment reorders the enabled ports according to the above port indication information (i.e. bitmap), and takes the reordered ports as the first antenna ports (which may also be expressed as a hypothetical antenna port or a hypothetical port).

For example, in a case the bitmap is '10101010', the enabled ports are ordered to obtain hypothetical antenna ports [3000,3000+1,3000+2,3000+3], wherein the hypothetical antenna ports [3000,3000+1,3000+2,3000+3] correspond respectively to actual ports [3000,3000+2,3000+4,3000+6] indicated in the bitmap.

a) step 4-1: method 1: the terminal equipment calculates the PMI under each sub-configuration information according to the above port indication information,

i. the first antenna ports include [3000 + 0, ..., 3000 + $P$-1]

1. for sub-configuration 1: hypothetical CSI-RS transmission of 8 ports and definition of the codebook are performed via [3000, 3000+1, ..., 3000+7], that is, the terminal equipment may calculate the PMI according to the channel information of the 8 ports.
2. for sub-configuration 2: hypothetical CSI-RS transmission of 4 ports and definition of the codebook are performed via [3000, 3000+1, ..., 3000+3], that is, the terminal equipment may calculate the PMI according to the channel information of the 4 ports.
3. for sub-configuration 3: hypothetical CSI-RS transmission of 2 ports and definition of the codebook are performed via [3000, 3000+1], that is, the terminal equipment may calculate the PMI according to the channel information of the 2 ports.

b) step 4-1: method 2: the terminal equipment calculates the PMI under each sub-configuration information according to the above port indication information,

i. the first antenna ports include [3000 + $p^{(0)}$, ..., 3000 + $p^{(P-1)}$], $0 \le p (j) \le Q$, $0 \le j \le P$-1;
ii. a value of $p^{(j)}$ is j.

1. For sub-configuration 1: $p^{(0)}$=0, $p^{(1)}$=1.... $p^{(7)}$=7, that is, hypothetical CSI-RS transmission of 8 ports and definition of the codebook are performed via [3000, 3000+1, ..., 3000+7], that is, the terminal equipment may calculate the PMI according to the channel information of the 8 ports.
2. For sub-configuration 2: $p^{(0)}$=0, $p^{(1)}$=1.... $p^{(3)}$=3, that is, hypothetical CSI-RS transmission of 4 ports and definition of the codebook are performed via [3000, 3000+1, ..., 3000+3], that is, the terminal equipment may calculate the PMI according to the channel information of the 4 ports.
3. For sub-configuration 3: $p^{(0)}$=0, $p^{(1)}$=1, that is, hypothetical CSI-RS transmission of 2 ports and definition of the codebook are performed via [3000, 3000+1], that is, the terminal equipment may calculate the PMI according to the channel information of the 2 ports. Reference may be made to relevant techniques for a method for calculating a PMI according to channel information, which shall not be further described herein.

c) step 4-2: the PMI described in step 4-1 is a precoding vector index value in the codebook, wherein for the *m-th* sub-configuration, the PMI is calculated according to codebooks of corresponding Pm ports.

d) step 4-3: according to a mapping relationship below, according to precoding (PMI information), the terminal equipment weights a channel result obtained by performing channel estimation according to the CSI-RS, calculates a current first SINR (signal to interference plus noise ratio) according to a CSI-RS-related port (a hypothetical port), and calculates a hypothetical SINR of the PDSCH according to energy per resource element (EPRE) between a PDSCH and the CSI-RS configured by the network device, and the terminal equipment fits a modulation order and SINR curve according to a calculation result of the current hypothetical SINR, and performs optimal CQI calculation and reporting according to a CQI quantization definition in the standards.

i. For sub-configuration 1:

$$\begin{bmatrix} y^{(3000)}(i) \\ \cdots \\ y^{(3000+B-1)}(i) \end{bmatrix} = W^1(i) \begin{bmatrix} x^{(0)}(i) \\ \cdots \\ x^{(\nu-1)}(i) \end{bmatrix};$$

where $x(i) = \begin{bmatrix} x^{(0)}(i) \\ \cdots \\ x^{(\nu-1)}(i) \end{bmatrix}$ denotes signal vectors of v layers of the PDSCH, $\begin{bmatrix} y^{(3000)}(i) \\ \cdots \\ y^{(3000+B-1)}(i) \end{bmatrix}$ are

CSI-RS resource symbols transmitted on antenna ports [3000, ..., 3000+8-1], and $W^1(i)$ is the PMI information calculated according to sub-configuration 1 in step 4-1.

ii. For sub-configuration 2:

$$\begin{bmatrix} y^{(3000)}(i) \\ y^{(3000+1)}(i) \\ y^{(3000+2)}(i) \\ y^{(3000+3)}(i) \end{bmatrix} = W^2(i) \begin{bmatrix} x^{(0)}(i) \\ \cdots \\ x^{(v-1)}(i) \end{bmatrix} ;$$

where $x(i) = \begin{bmatrix} x^{(0)}(i) \\ \cdots \\ x^{(v-1)}(i) \end{bmatrix}$ denotes signal vectors of v layers of the PDSCH, $\begin{bmatrix} y^{(3000)}(i) \\ \cdots \\ y^{(3000+4-1)}(i) \end{bmatrix}$ are CSI-

RS resource symbols transmitted on antenna ports [3000, 3000+2-1, 3000+3-1, 3000+4-1] (i.e. CSI-RS resource symbols assumed at the antenna ports [3000, 3000+2-1, 3000+3-1, 3000+4-1], and CSI-RS resource symbols actually on antenna ports [3000, 3000+3-1, 3000+5-1, 3000+7-1]), and $W^2(i)$ is the PMI information calculated according to sub-configuration 2 in step 4-1.

iii. For sub-configuration 3:

$$\begin{bmatrix} y^{(3000)}(i) \\ y^{(3000+1)}(i) \end{bmatrix} = W^3(i) \begin{bmatrix} x^{(0)}(i) \\ \cdots \\ x^{(v-1)}(i) \end{bmatrix};$$

where $x(i) = \begin{bmatrix} x^{(0)}(i) \\ \cdots \\ x^{(v-1)}(i) \end{bmatrix}$ denotes signal vectors of v layers of the PDSCH, $\begin{bmatrix} y^{(3000)}(i) \\ \cdots \\ y^{(3000+2-1)}(i) \end{bmatrix}$ are CSI-

RS resource symbols transmitted on antenna ports [3000, 3000+2-1] (i.e. CSI-RS resource symbols assumed at the antenna ports [3000, 3000+2-1], and CSI-RS resource symbols actually on antenna ports [3000, 3000+3-1]), and $W^2(i)$ is the PMI information calculated according to sub-configuration 3 in step 4-1.

Example 2:

1) Step 1: the terminal equipment receives the CSI-RS resource configuration information for channel measurement, the CSI-RS resource configuration information at least including the indication information of the number of ports 'nrofports', and further including 1 CSI-RS resource set, the CSI-RS resource set including N=4 CSI-RS resources;

2) Step 2: the CSI reporting configuration information includes at least M=3 pieces of sub-configuration information, the M=3 pieces of sub-configuration information being used to configure CSI reporting information of M=3 pieces of sub-configurations, where M=3, representing three types of sub-configuration information: 8-port sub-configuration information, 4-port sub-configuration information, and 2-port sub-configuration information;

a) step 2-1: configuration of the port indication information *(port-subsetIndicator)* of the 3 pieces of sub-configuration information may be performed in following manners:

i. port indication of the sub-configurations is performed via a bitmap of Q bits,

1. Q is equal to a value of the indication information of the number of ports 'nrofports' in the CSI-RS resource configuration information.

2. 8 ports may be indicated by a bitmap of 8 bits, such as '11111111', that is, 8 ports are configured and enabled, where P is the number of enabled ports indicated by the port indication information *(port-*

*subsetIndicator)* of the sub-configuration information, i.e. the number of ports with a value of 1 in the bitmap, i.e. P=8;

3. 4 ports may be indicated by a bitmap of 8 bits, such as '10101010', that is, 8 ports are configured and ports with indices of 0, 2, 4 and 6 in the 8 ports are enabled, where P is the number of enabled ports indicated by the port indication information (*port-subsetIndicator*) of the sub-configuration information, i.e. the number of ports with a value of 1 in the bitmap, i.e. P=4;

4. 2 ports may be indicated by a bitmap of 8 bits, such as '10100000', that is, 8 ports are configured and ports with indices of 0 and 2 in the 8 ports are enabled, where P is the number of enabled ports indicated by the port indication information (*port-subsetIndicator*) of the sub-configuration information, i.e. the number of ports with a value of 1 in the bitmap, i.e. P=2;

b) parameters under a codebook of each piece of sub-configuration information are configured in a manner as follows:

i. (N1m, N2m) denotes a codebook parameter of the *m-th* sub-configuration information, where N1m is the number of antenna ports in a first dimension (horizontal dimension) in a polarization direction, and N2m is the number of antenna ports in a second dimension (vertical dimension) in a polarization direction; wherein for the *m-th* sub-configuration, $2*N1m*N2m=Pm= P_{CSI-RS}$, that is, the number of CSI-RS ports of the *m-th* sub-configuration is Pm ($P_{CSI-RS}$)

1. for sub-configuration 1: 2*N11*N21=8;
2. for sub-configuration 2: 2*N11*N21=4;
3. for sub-configuration 3: 2*N11*N21=2.

3) step 3: 4 resources in the CSI-RS resource configuration information are all related to M=3 pieces of sub-configuration information in the CSI reporting configuration information, and the terminal equipment selects and calculates the optimal CSI-RS resource for CSI reporting of each sub-configuration;

4) step 4: the terminal equipment measures channel state information under three sub-configurations according to 4 resources and the M=3 pieces of sub-configuration information, and reports all CSI of the three sub-configurations.

a) step 4-1: method 1: the terminal equipment calculates the PMI under each sub-configuration information according to the above port indication information,

i. for sub-configuration 1: performing hypothetical CSIRS transmission and codebook definition of 8 ports via [3000,3000+1,...3000+7], that is, the terminal equipment may calculate the PMI according to the channel information of the 8 ports.

ii. for sub-configuration 2: performing port mapping according to an index of a CSI-RS port with a value of '1' in the bitmap (i.e. an enabled port), that is, hypothetical CSI-RS transmission of 4 ports and definition of the codebook are performed via [3000,3000+2,3000+4, 3000+6], that is, the terminal equipment may calculate the PMI according to the channel information of the 4 ports.

iii. for sub-configuration 3: performing port mapping according to an index of a CSI-RS port with a value of '1' in the bitmap (i.e. an enabled port), that is, hypothetical CSI-RS transmission of 2 ports and definition of the codebook are performed via [3000,3000+2], that is, the terminal equipment may calculate the PMI according to the channel information of the 2 ports.

b) step 4-1: method 2: the terminal equipment calculates the PMI under each sub-configuration information according to the above port indication information,

i. the first antenna ports include $[3000 + p^{(0)}, ..., 3000 + p^{(P-1)}]$, $0 \leq p^{(j)} \leq Q$, $0 \leq j \leq P-1$;

ii. a value of $p^{(j)}$ is an index of a *j-th* enabled port indicated by the port indication information (*port-subsetIndicator*), specifically, it may be an index of a port with a value of 1 in the bitmap.

1. For sub-configuration 1: $p^{(0)}=0$, $p^{(1)}=1$.... $p^{(7)}=7$, that is, hypothetical CSI-RS transmission of 8 ports and definition of the codebook are performed via [3000, 3000+1, ...3000+7], that is, the terminal equipment may calculate the PMI according to the channel information of the 8 ports.

2. For sub-configuration 2: $p^{(0)}=0$, $p^{(1)}=2$, $p^{(2)}=4$, $p^{(3)}=6$, that is, hypothetical CSI-RS transmission of 4 ports and definition of the codebook are performed via [3000, 3000+2, 3000+4, 3000+6], that is, the terminal equipment may calculate the PMI according to the channel information of the 4 ports.

3. For sub-configuration 3: $p^{(0)}$=0, $p^{(1)}$=2, that is, hypothetical CSI-RS transmission of 2 ports and definition of the codebook are performed via [3000, 3000+2], that is, the terminal equipment may calculate the PMI according to the channel information of the 2 ports.

c) step 4-2: the PMI described in step 4-1 is a precoding vector index value in the codebook, wherein for the *m-th* sub-configuration, the PMI is calculated according to codebooks of corresponding Pm ports.

d) step 4-3: according to a mapping relationship below, according to precoding (PMI information), the terminal equipment weights a channel result obtained by performing channel estimation according to the CSI-RS, calculates a current first SINR (signal to interference plus noise ratio) according to a CSI-RS-related port (a hypothetical port), and calculates a hypothetical SINR of the PDSCH according to energy per resource element (EPRE) between a PDSCH and the CSI-RS configured by the network device, and the terminal equipment fits a modulation order and SINR curve according to a calculation result of the current hypothetical SINR, and performs optimal CQI calculation and reporting according to a CQI quantization definition in the standards.

i. For sub-configuration 1:

$$\begin{bmatrix} y^{(3000)}(i) \\ \cdots \\ y^{(3000+8-1)}(i) \end{bmatrix} = W^1(i) \begin{bmatrix} x^{(0)}(i) \\ \cdots \\ x^{(v-1)}(i) \end{bmatrix};$$

where $x(i) = \begin{bmatrix} x^{(0)}(i) \\ \cdots \\ x^{(v-1)}(i) \end{bmatrix}$ denotes signal vectors of v layers of the PDSCH, $\begin{bmatrix} y^{(3000)}(i) \\ \cdots \\ y^{(3000+8-1)}(i) \end{bmatrix}$ are

CSI-RS resource symbols transmitted on antenna ports [3000, ..., 3000+8-1], and $W^1(i)$ is the PMI information calculated according to sub-configuration 1 in step 4-1.

ii. For sub-configuration 2:

$$\begin{bmatrix} y^{(3000)}(i) \\ y^{(3000+2)}(i) \\ y^{(3000+4)}(i) \\ y^{(3000+6)}(i) \end{bmatrix} = W^2(i) \begin{bmatrix} x^{(0)}(i) \\ \cdots \\ x^{(v-1)}(i) \end{bmatrix};$$

where $x(i) = \begin{bmatrix} x^{(0)}(i) \\ \cdots \\ x^{(v-1)}(i) \end{bmatrix}$ denotes signal vectors of v layers of the PDSCH, $\begin{bmatrix} y^{(3000)}(i) \\ y^{(3000+2)}(i) \\ y^{(3000+4)}(i) \\ y^{(3000+6)}(i) \end{bmatrix}$ are CSI-

RS resource symbols transmitted on antenna ports [3000, 3000+2, 3000+4, 3000+6] (i.e. CSI-RS resource symbols actually on antenna ports [3000,3000+2,3000+4,3000+6]), and $W^2(i)$ is the PMI information calculated according to sub-configuration 2 in step 4-1.

iii. For sub-configuration 3:

$$\begin{bmatrix} y^{(3000)}(i) \\ y^{(3000+2)}(i) \end{bmatrix} = W^3(i) \begin{bmatrix} x^{(0)}(i) \\ \cdots \\ x^{(v-1)}(i) \end{bmatrix};$$

where $x(i) = \begin{bmatrix} x^{(0)}(i) \\ \cdots \\ x^{(v-1)}(i) \end{bmatrix}$ denotes signal vectors of v layers of the PDSCH, $\begin{bmatrix} y^{(3000)}(i) \\ y^{(3000+2)}(i) \end{bmatrix}$ are CSI-

RS resource symbols transmitted on antenna ports [3000,3000+2] (i.e. CSI-RS resource symbols actually on antenna ports [3000,3000+2), and $W^3(i)$ is the PMI information calculated according to sub-configuration 3 in step 4-1.

In some embodiments, in 402, the CSI may be calculated according to a determined mapping relationship, and the CSI may include a PMI, and a CQI, etc. A specific method for calculating the CSI according to the mapping relationship is as described above. For example, through precoding (PMI information), the UE weights a channel result H obtained by performing channel estimation according to the CSI-RS, calculates a current first SINR (signal to interference plus noise ratio) according to a CSI-RS-related port (a hypothetical port), and calculates a hypothetical SINR of the PDSCH according to energy per resource element (EPRE) between a PDSCH and the CSI-RS configured by the network device, and the terminal equipment fits a modulation order and SINR curve according to a calculation result of the current hypothetical SINR, and performs optimal CQI calculation and reporting according to a CQI quantization definition in the standards. However, this disclosure is not limited thereto, and reference may be made to relevant techniques for a specific method for calculating the CSI according to the mapping relationship.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiment that calculation and reporting of CSI are performed at least according to the corresponding symbol(s) on the first antenna port(s) related to at least one of the M pieces of sub-configuration information. Hence, the CSI may be accurately obtained, data transmission performances may be improved, and overall throughput of a single user and the network may be improved.

Embodiment of a second aspect

The embodiment of this disclosure provides an apparatus for calculating channel state information. The apparatus may be, for example, a terminal equipment, or may be one or some components or assemblies configured in the terminal equipment, with contents identical to those in the embodiment of the first aspect being not going to be described herein any further.

FIG. 6 is a schematic diagram of the apparatus for calculating channel state information of an embodiment of this disclosure. As shown in FIG, 6, the apparatus 600 for calculating channel state information includes: a receiving unit 601 and a processing unit 602.

The receiving unit 601 at least receives channel state information (CSI) reporting configuration information, wherein the CSI reporting configuration information includes M pieces of sub-configuration information, where M is an integer greater than or equal to 1;

and the processing unit calculates and reports CSI at least according to one or more corresponding symbols on one or more first antenna ports to which at least one of the M pieces of sub-configuration information is related.

In some embodiments, the receiving unit further receives CSI-RS resource configuration information, wherein the CSI-RS resource configuration information at least includes indication information of the number of ports *(nrofports)*.

In some embodiments, the CSI at least includes:

CQI (channel quality information), and/or,
PMI (precoding matrix indicator) information.

In some embodiments, the first antenna ports include $[3000 + p^{(0)}, ..., 3000 + p^{(P-1)}]$, where P is the number of enabled ports indicated by port indication information *(port-subsetIndicator)* of the sub-configuration information, and $0 \leq p^{(j)} \leq Q$, $0 \leq j \leq P-1$, where Q is equal to a value of the indication information of the number of ports *(nrofports)* in the CSI-RS resource configuration information.

In some embodiments, a value of $p^{(j)}$ is an index of a *j-th* enabled port indicated by the port indication information *(port-subsetIndicator)*.

In some embodiments, a value of $p^{(j)}$ is j.

In some embodiments, the first antenna ports include $[3000 + 0, ..., 3000 + P-1]$, where P is the number of enabled ports indicated by port indication information *(port-subsetIndicator)* of the sub-configuration information.

In some embodiments, calculation of the CQI is at least according to assumed physical downlink shared channel (PDSCH) signals, where the PDSCH signals are transmitted on antenna ports [1000,..., 1000+v -1], and the PDSCH signals are related to corresponding symbols on the first antenna ports, where v is the number of PDSCH transmission layers.

In some embodiments, a correlation between the PDSCH signals and the corresponding symbols on the first antenna ports of an *m-th* sub-configuration is:

$$\begin{bmatrix} y^{(3000+p^{(0)})}(i) \\ \cdots \\ y^{(3000+p^{(P-1)})}(i) \end{bmatrix} = W^m(i) \begin{bmatrix} x^{(0)}(i) \\ \cdots \\ x^{(v-1)}(i) \end{bmatrix};$$

where $\begin{bmatrix} x^{(0)}(i) \\ \cdots \\ x^{(v-1)}(i) \end{bmatrix}$ denotes signal vectors of v layers of the PDSCH signals, $\begin{bmatrix} y^{(3000+p^{(0)})}(i) \\ \cdots \\ y^{(3000+p^{(P-1)})}(i) \end{bmatrix}$ denotes the

corresponding symbols on the antenna ports [3000 + $p^{(0)}$, ..., 3000 + $p^{(P-1)}$], and $W^m(i)$ denotes PMI information calculated according to *m-th* sub-configuration information, and $1 \leq m \leq M$.

In some embodiments, a correlation between the PDSCH signals and the corresponding symbols on the first antenna ports of an *m-th* sub-configuration is:

$$\begin{bmatrix} y^{(3000+0)}(i) \\ \cdots \\ y^{(3000+P-1)}(i) \end{bmatrix} = W^m(i) \begin{bmatrix} x^{(0)}(i) \\ \cdots \\ x^{(v-1)}(i) \end{bmatrix};$$

where $\begin{bmatrix} x^{(0)}(i) \\ \cdots \\ x^{(v-1)}(i) \end{bmatrix}$ denotes signal vectors of v layers of the PDSCH signals, $\begin{bmatrix} y^{(3000+0)}(i) \\ \cdots \\ y^{(3000+P-1)}(i) \end{bmatrix}$ denotes the

corresponding symbols on the antenna ports [3000 + 0, ..., 3000 + *P* - 1], and $W^m(i)$ denotes PMI information calculated according to *m-th* sub-configuration information, and $1 \leq m \leq M$.

In some embodiments, *m-th* sub-configuration information in the M pieces of sub-configuration information includes 1 piece of port indication information, where $1 \leq m \leq M$.

In some embodiments, the port indication information is a bitmap with Q bits, where Q is equal to a value of indication information of the number of ports *(nrofports)* in the CSI-RS resource configuration information.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the apparatus 600 for calculating channel state information may further include other components or modules, and reference may be made to related techniques for particulars of these components or modules.

Furthermore, for the sake of simplicity, connection relationships between the components or modules or signal profiles thereof are only illustrated in FIG. 6. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that calculation and reporting of CSI are performed at least according to the corresponding symbol(s) on the first antenna port(s) related to at least one of the M pieces of sub-configuration information. Hence, the CSI may be accurately obtained, data transmission performances may be improved, and overall throughput of a single user and the network may be improved.

Embodiment of a third aspect

The embodiment of this disclosure provides a communication system, and reference may be made to FIG. 1, with contents identical to those in the embodiments of the first to the second aspects being not going to be described herein any further.

In some embodiments, the communication system 100 may at least include a network device and a terminal equipment, wherein the terminal equipment at least receives channel state information (CSI) reporting configuration information, wherein the CSI reporting configuration information includes M pieces of sub-configuration information, where M is an integer greater than or equal to 1; and calculates and reports CSI at least according to the corresponding symbols on first antenna ports to which at least one of the M pieces of sub-configuration information is related.

The embodiment of this disclosure further provides a network device, which may be, for example, a base station. However, this disclosure is not limited thereto, and it may also be another network device.

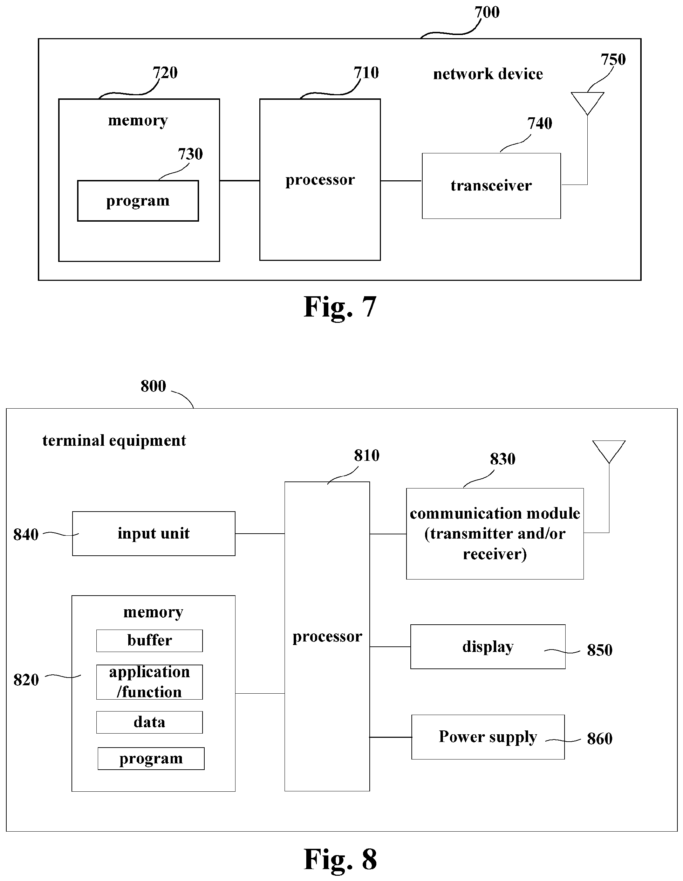

FIG. 7 is a schematic diagram of a structure of the network device of the embodiment of this disclosure. As shown in FIG. 7, the network device 700 may include a processor 710 (such as a central processing unit (CPU)) and a memory 720, the memory 720 being coupled to the processor 710. The memory 720 may store various data, and furthermore, it may store a program 730 for information processing, and execute the program 730 under control of the processor 710.

For example, the processor 710 may be configured to execute a program to execute the operations of the network device in the method described in the embodiment of the first aspect. For example, the processor 710 may be configured to perform the following control: at least transmitting channel state information (CSI) reporting configuration information, wherein the CSI reporting configuration information includes M pieces of sub-configuration information, where M is an integer greater than or equal to 1; and receiving CSI, the CSI being calculated at least according to one or more corresponding symbols on one or more first antenna ports to which at least one of the M pieces of sub-configuration information is related.

Furthermore, as shown in FIG. 7, the network device 700 may include a transceiver 740, and an antenna 750, etc. Functions of the above components are similar to those in the related art, and shall not be described herein any further. It should be noted that the network device 700 does not necessarily include all the parts shown in FIG. 7, and furthermore, the network device 700 may include parts not shown in FIG. 7, and the related art may be referred to.

The embodiment of this disclosure further provides a terminal equipment; however, this disclosure is not limited thereto, and it may also be another equipment.

FIG. 8 is a schematic diagram of the terminal equipment of the embodiment of this disclosure. As shown in FIG. 8, the terminal equipment 800 may include a processor 810 and a memory 820, the memory 820 storing data and a program and being coupled to the processor 810. It should be noted that this figure is illustrative only, and other types of structures may also be used, so as to supplement or replace this structure and achieve a telecommunications function or other functions.

For example, the processor 810 may be configured to execute a program to carry out the method as described in the embodiment of the first aspect. For example, the processor 810 may be configured to perform the following control: at least transmitting channel state information (CSI) reporting configuration information, wherein the CSI reporting configuration information includes M pieces of sub-configuration information, where M is an integer greater than or equal to 1; and receiving CSI reporting, the CSI reporting being calculated at least according to one or more corresponding symbols on one or more first antenna ports to which at least one of the M pieces of sub-configuration information is related.

As shown in FIG. 8, the terminal equipment 800 may further include a communication module 830, an input unit 840, a display 850, and a power supply 860; wherein functions of the above components are similar to those in the related art, which shall not be described herein any further. It should be noted that the terminal equipment 800 does not necessarily include all the parts shown in FIG. 8, and the above components are not necessary. Furthermore, the terminal equipment 800 may include parts not shown in FIG. 8, and the related art may be referred to.

An embodiment of this disclosure provides a computer readable program code, which, when executed in a terminal equipment, will cause the terminal equipment to carry out the method as described in the embodiment of the first aspect.

An embodiment of this disclosure provides a computer readable medium, including a computer readable program code, which will cause a terminal equipment to carry out the method as described in the embodiment of the first aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

As to implementations containing the above embodiments, following supplements are further disclosed.

1. A method for calculating channel state information, applicable to a terminal equipment, the method including:

at least receiving channel state information (CSI) reporting configuration information, wherein the CSI reporting configuration information includes M pieces of sub-configuration information, where M is an integer greater than or equal to 1; and
calculating and reporting CSI at least according to one or more corresponding symbols on one or more first antenna ports to which at least one of the M pieces of sub-configuration information is related.

2. The apparatus according to supplement 1, wherein the CSI at least includes:

CQI (channel quality information), and/or,
PMI (precoding matrix indicator) information.

3. The method according to supplement 2, wherein calculation of the CQI is at least according to assumed physical downlink shared channel (PDSCH) signals, the PDSCH signals being transmitted on antenna ports [1000, ..., 1000+v -1], and being related to the corresponding symbols on the first antenna ports, where v is the number of PDSCH transmission layers.

4. The method according to supplement 3, wherein a correlation between the PDSCH signals and the corresponding symbols on the first antenna ports of an *m-th* sub-configuration is:

$$\begin{bmatrix} y^{(3000+p^{(0)})}(i) \\ \cdots \\ y^{(3000+p^{(P-1)})}(i) \end{bmatrix} = W^m(i) \begin{bmatrix} x^{(0)}(i) \\ \cdots \\ x^{(v-1)}(i) \end{bmatrix} ;$$

where $\begin{bmatrix} x^{(0)}(i) \\ \cdots \\ x^{(v-1)}(i) \end{bmatrix}$ denotes signal vectors of v layers of the PDSCH signals, $\begin{bmatrix} y^{(3000+p^{(0)})}(i) \\ \cdots \\ y^{(3000+p^{(P-1)})}(i) \end{bmatrix}$ denotes the

corresponding symbols on the antenna ports [3000 + $p^{(0)}$, ..., 3000 + $p^{(P-1)}$], and **$W^m(i)$** denotes PMI information calculated according to *m-th* sub-configuration information, and $1 \leq m \leq M$.

5. The method according to supplement 3, wherein a correlation between the PDSCH signals and the corresponding symbols on the first antenna ports of an *m-th* sub-configuration is:

$$\begin{bmatrix} y^{(3000+0)}(i) \\ \cdots \\ y^{(3000+P-1)}(i) \end{bmatrix} = W^m(i) \begin{bmatrix} x^{(0)}(i) \\ \cdots \\ x^{(v-1)}(i) \end{bmatrix};$$

where $\begin{bmatrix} x^{(0)}(i) \\ \cdots \\ x^{(v-1)}(i) \end{bmatrix}$ denotes signal vectors of v layers of the PDSCH signals, $\begin{bmatrix} y^{(3000+0)}(i) \\ \cdots \\ y^{(3000+P-1)}(i) \end{bmatrix}$ denotes the

corresponding symbols on the antenna ports [3000 + 0, ..., 3000 + $P$ - 1], and $W^m(i)$ denotes PMI information calculated according to *m-th* sub-configuration information, and $1 \leq m \leq M$.

6. The method according to supplement 1, wherein,
*m-th* sub-configuration information in the M pieces of sub-configuration information may include 1 piece of port indication information *(port-subsetIndicator),* where $1 \leq m \leq M$.

7. The method according to supplement 6, wherein,
the port indication information is a bitmap with Q bits, where Q is equal to a value of indication information of the number of ports *(nrofports)* in the CSI-RS resource configuration information.

## Claims

1. An apparatus for calculating channel state information, configured in a terminal equipment, the apparatus comprising:

   a receiving unit configured to at least receive channel state information (CSI) reporting configuration information, wherein the CSI reporting configuration information comprises M pieces of sub-configuration information, where M is an integer greater than or equal to 1; and
   a processing unit configured to calculate and report CSI at least according to one or more corresponding symbols on one or more first antenna ports to which at least one of the M pieces of sub-configuration information is related.

2. The apparatus according to claim 1, wherein,
   the receiving unit further receives channel state information reference signal (CSI-RS) resource configuration information, wherein the CSI-RS resource configuration information at least comprises indication information of the number of ports.

3. The apparatus according to claim 1, wherein the CSI at least comprises:

   CQI (channel quality information), and/or,
   PMI (precoding matrix indicator) information.

4. The apparatus according to claim 2, wherein,
   the first antenna ports comprise [3000 + $p^{(0)}$, ..., 3000 + $p^{(P-1)}$], where P is the number of enabled ports indicated by port indication information of the sub-configuration information, and $0 \leq p^{(j)} \leq Q$, $0 \leq j \leq P-1$, where Q is equal to a value of the indication information of the number of ports in the CSI-RS resource configuration information.

5. The apparatus according to claim 4, wherein,
   a value of $p^{(j)}$ is an index of *a j-th* enabled port indicated by the port indication information.

6. The apparatus according to claim 4, wherein,
   a value of $p^{(j)}$ is j.

7. The apparatus according to claim 1, wherein,
   the first antenna ports comprise [3000 + 0, ..., 3000 + *P-1*], where P is the number of enabled ports indicated by port indication information of the sub-configuration information.

**8.** The apparatus according to claim 3, wherein calculation of the CQI is at least according to assumed physical downlink shared channel (PDSCH) signals, where the PDSCH signals are transmitted on antenna ports [1000, ..., 1000+v-1], and the PDSCH signals are associated with the corresponding symbols on the first antenna ports, where v is the number of PDSCH transmission layers.

**9.** The apparatus according to claim 8, wherein a correlation between the PDSCH signals and the corresponding symbols on the first antenna ports of an *m-th* sub-configuration is:

$$\begin{bmatrix} y^{(3000+p^{(0)})}(i) \\ \cdots \\ y^{(3000+p^{(P-1)})}(i) \end{bmatrix} = W^m(i) \begin{bmatrix} x^{(0)}(i) \\ \cdots \\ x^{(v-1)}(i) \end{bmatrix} ;$$

where $\begin{bmatrix} x^{(0)}(i) \\ \cdots \\ x^{(v-1)}(i) \end{bmatrix}$ denotes signal vectors of v layers of the PDSCH signals, $\begin{bmatrix} y^{(3000+p^{(0)})}(i) \\ \cdots \\ y^{(3000+p^{(P-1)})}(i) \end{bmatrix}$ denotes the

corresponding symbols on antenna ports [3000 + , ..., 3000 + $p^{(P-1)}$], and $W^m(i)$ denotes PMI information calculated according to *m-th* sub-configuration information, and $1 \leq m \leq M$.

**10.** The apparatus according to claim 8, wherein a correlation between the PDSCH signals and the corresponding symbols on the first antenna ports of an *m-th* sub-configuration is:

$$\begin{bmatrix} y^{(3000+0)}(i) \\ \cdots \\ y^{(3000+P-1)}(i) \end{bmatrix} = W^m(i) \begin{bmatrix} x^{(0)}(i) \\ \cdots \\ x^{(v-1)}(i) \end{bmatrix} ;$$

where $\begin{bmatrix} x^{(0)}(i) \\ \cdots \\ x^{(v-1)}(i) \end{bmatrix}$ denotes signal vectors of v layers of the PDSCH signals, $\begin{bmatrix} y^{(3000+0)}(i) \\ \cdots \\ y^{(3000+P-1)}(i) \end{bmatrix}$ denotes the

corresponding symbols on antenna ports [3000 + 0, ..., 3000 + *P* - 1], and $W^m(i)$ denotes PMI information calculated according to *m-th* sub-configuration information, and $1 \leq m \leq M$.

**11.** The apparatus according to claim 2, wherein,
*m-th* sub-configuration information in the M pieces of sub-configuration information comprises 1 piece of port indication information, where $1 \leq m \leq M$.

**12.** The apparatus according to claim 11, wherein,
the port indication information is a bitmap with Q bits, where Q is equal to a value of the indication information of the number of ports in the CSI-RS resource configuration information.

**13.** A method for calculating channel state information, applicable to a terminal equipment, the method comprising:

at least receiving channel state information (CSI) reporting configuration information, wherein the CSI reporting configuration information comprises M pieces of sub-configuration information, where M is an integer greater than or equal to 1; and
calculating and reporting CSI at least according to one or more corresponding symbols on one or more first antenna ports to which at least one of the M pieces of sub-configuration information is related.

**14.** The method according to claim 13, wherein the method further comprises:
receiving channel state information reference signal (CSI-RS) resource configuration information, wherein the CSI-RS resource configuration information at least comprises indication information of the number of ports.

**15.** The method according to claim 13, wherein the CSI at least comprises:

CQI (channel quality information), and/or,
PMI (precoding matrix indicator) information.

**16.** The method according to claim 14, wherein,
the first antenna ports comprise $[3000 + p^{(0)}, ..., 3000 + p^{(P-1)}]$, where P is the number of enabled ports indicated by port indication information of the sub-configuration information, and $0 \leq p^{(j)} \leq Q$, $0 \leq j \leq P-1$, where Q is equal to a value of the indication information of the number of ports in the CSI-RS resource configuration information.

**17.** The method according to claim 16, wherein,
a value of $p^{(j)}$ is an index of *a j-th* enabled port indicated by the port indication information.

**18.** The method according to claim 16, wherein,
a value of $p^{(j)}$ is j.

**19.** The method according to claim 13, wherein,
the first antenna ports comprise $[3000+0, ..., 3000+P\text{-}1]$, where P is the number of enabled ports indicated by port indication information of the sub-configuration information.

**20.** A communication system, comprising a network device and a terminal equipment, the terminal equipment comprising the apparatus for calculating channel state information as claimed in claim 1.

**Fig. 1**

ON/OFF adaption        ON/OFF adaption

**Fig. 2**

303

| receiving CSI-RS resource configuration information |

301

| at least receiving channel state information (CSI) reporting configuration information |

302

| calculating and reporting CSI at least according to one or more corresponding symbols on one or more first antenna ports to which at least one of the M pieces of sub-configuration information is related |

## Fig. 3

```
1        5    3        7

0        4    2        6
```

8 ports (N1,N2) = (2,2)

## Fig. 4

501

determining the correlation between the PDSCH signals and the corresponding symbols on the first antenna ports of the *m-th* sub-configuration

502

calculating the CQI according to correlation

**Fig. 5**

600

apparatus for calculating
channel state information

601

receiving unit

602

processing unit

**Fig. 6**

700

720　　　　　　　　　710　　　network device　　750

memory

730

program　　　processor　　　740

transceiver

**Fig. 7**

800

terminal equipment

810　　　830

840 —　input unit　　　processor　　　communication module
(transmitter and/or
receiver)

memory

buffer

820 —　application
/function　　　display — 850

data

program　　　Power supply — 860

**Fig. 8**

EP 4 787 720 A1

# INTERNATIONAL SEARCH REPORT

International application No.

**PCT/CN2023/121818**

### A. CLASSIFICATION OF SUBJECT MATTER

H04B 7/0456(2017.01)i

According to International Patent Classification (IPC) or to both national classification and IPC

### B. FIELDS SEARCHED

Minimum documentation searched (classification system followed by classification symbols)

IPC: H04B H04W

Documentation searched other than minimum documentation to the extent that such documents are included in the fields searched

Electronic data base consulted during the international search (name of data base and, where practicable, search terms used)

CNTXT; CNKI; WPABSC; ENTXTC; ENTXT; 3GPP: 信道状态信息, 配置, 子配置, 天线端口, 符号, 数量, 参考信号, configuration, sub-configuration, CSI, CQI, PMI, CSI-RS, antenna, port, reference

### C. DOCUMENTS CONSIDERED TO BE RELEVANT

| Category* | Citation of document, with indication, where appropriate, of the relevant passages | Relevant to claim No. |
|---|---|---|
| X | VIVO. "Discussions on techniques in spatial and power domains"<br>*3GPP TSG RAN WG1 #112bis-e, R1-2302498*, No. tsgr1_112b-e, 07 April 2023 (2023-04-07),<br>section 2.2 | 1-3, 13-15, 20 |
| X | MODERATOR (HUAWEI). "Final FL summary for spatial and power domain techniques for R18 NES"<br>*3GPP TSG RAN WG1 Meeting #112, R1- 2302179*, 03 March 2023 (2023-03-03),<br>pages 10 and 31 | 1-3, 13-15, 20 |
| A | CN 109151887 A (HUAWEI TECHNOLOGIES CO., LTD.) 04 January 2019 (2019-01-04)<br>entire document | 1-20 |
| A | WO 2023026196 A1 (TELEFONAKTIEBOLAGET LM ERICSSON (PUBL)) 02 March 2023 (2023-03-02)<br>entire document | 1-20 |

☐ Further documents are listed in the continuation of Box C.    ☑ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **05 June 2024** | **13 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/121818**

| Patent document cited in search report | | | Publication date (day/month/year) | Patent family member(s) | | | Publication date (day/month/year) |
|---|---|---|---|---|---|---|---|
| CN | 109151887 | A | 04 January 2019 | EP | 3637838 | A1 | 15 April 2020 |
| | | | | EP | 3637838 | A4 | 10 June 2020 |
| | | | | EP | 3637838 | B1 | 13 October 2021 |
| | | | | US | 2020119797 | A1 | 16 April 2020 |
| | | | | US | 11283503 | B2 | 22 March 2022 |
| | | | | WO | 2018228571 | A1 | 20 December 2018 |
| | | | | CN | 109151887 | B | 24 October 2023 |
| WO | 2023026196 | A1 | 02 March 2023 | CA | 3229578 | A1 | 02 March 2023 |

Form PCT/ISA/210 (patent family annex) (July 2022)